# EUROPEAN PATENT APPLICATION

(11) **EP 4 209 382 A1**
(43) Date of publication of application: **12.07.2023**
(21) Application number: 22150994.6
(22) Date of filing: 11.01.2022
(51) Int. Cl.: B60L 5/12, B60L 5/24, H01B 17/00

(54) **ISOLATION BARRIER PROTECTION ON MULTIPOLE PANTOGRAPHS**

(71) Applicant: ABB E-Mobility B.V., 2629 JG Delft (NL)
(72) Inventor: ZOON, Wiebe, 2623 NM Delft (NL); KOOLEN, Gertjan, 5622 CV Eindhoven (NL); STOSUR, Mariusz, 58-130 Imbramowice (PL)
(74) Representative: Maiwald GmbH

(57) **Abstract**

The invention relates to the field of electric vehicle charging infrastructure, particularly for large vehicles, e.g. busses or trucks, which are charged via a pantograph (50). The invention discloses a pole separating arrangement (10) for a multipole pantograph (50) or a multipole fixed arrangement for charging an electric vehicle. The pole separating arrangement (10) comprises a first conducting pole (22), arranged on an isolating carrier (20) and configured for contacting a corresponding first pole on the electric vehicle; a second conducting pole (24), arranged on the isolating carrier (20) and configured for contacting a corresponding second pole on the electric vehicle; and an isolating pole separator (30), arranged between the first conducting pole (22) and the second conducting pole (24), wherein the pole separator (30) has at least one upward pointing arc (32).

## Description

### Field of the Invention

The invention relates to the field of electric vehicle charging infrastructure, particularly for large vehicles, e.g. busses or trucks, which are charged via a pantograph. The invention further relates to a use.

### Background

For a so-called "opportunity charging", e.g. of electric busses, in at least some cases a multipole pantograph is used. The pantograph may be mounted on an overhead system comprising a stationary pole. As an alternative, the pantograph may be arranged on the bus, going upwards to the overhead fixed arrangement. To use this system, a bus may be placed underneath the pantograph, and after the bus being positioned correctly, the pantograph may move down (or up, in the alternative) to connect with electrical contacts on the roof of the bus, for initiating a charging process. This pantograph-based system is in many cases positioned outdoor, and thus exposed to weather, e.g. to rain. Hence, measures for improving an electric isolation between the pantograph's poles may be useful.

### Description

It is an objective of the invention to provide an improved electric isolation between the pantograph's poles. This objective is achieved by the subject-matter of the independent claims. Further embodiments are evident from the dependent claims and the following description.

One aspect relates to a pole separating arrangement for a multipole pantograph or a multipole fixed arrangement for charging an electric vehicle, the pole separating arrangement comprising:
a first conducting pole, arranged on an isolating carrier and configured for contacting a corresponding first pole on the electric bus;
a second conducting pole, arranged on the isolating carrier and configured for contacting a corresponding second pole on the electric bus; and an isolating pole separator, arranged between the first conducting pole and the second conducting pole, wherein the pole separator has at least one upward pointing arc.

A multipole pantograph may comprise a plurality of so-called poles, i.e. contacts that are used for charging. For instance, the poles may comprise connections for DC+, for DC-, for Protected Earth (PE) or another ground line, and a signal line, which may, e.g., control the charging process, which may comprise a communication and safety verification process. The poles are arranged on a pantograph, e.g. to make sure that the poles are kept essentially horizontal when moving down to connect with electrical contacts on the roof of the vehicle. As an alternative, the pantograph may be arranged on the bus, so that the poles are kept essentially horizontal when moving up to connect with electrical contacts on an overhead multipole fixed arrangement - sometimes called "hood" -, which is configured for delivering the charging power. In this case, the features of the multipole pantograph may be applied to the multipole fixed arrangement. The vehicle may be a bus, a truck, and/or another vehicle that is configured for carrying corresponding poles to the pantograph's poles, e.g. on its roof. Furthermore, the vehicle needs to be compatible w.r.t. to electrical and further aspects, e.g. to support an adequate charging protocol.

At least two of the poles (a first and a second conducting pole) may be arranged on one bar, e.g. an electrically isolating bar or carrier, on which at least two electrically conducting poles - e.g. in form of rails - are mounted. Humidity, e.g. caused by rain, snow, etc., may lead to electric creepage between the poles. To prevent, or at least reduce the creepage, an isolating pole separator is arranged between the first and the second conducting pole. The pole separator has at least one upward pointing arc. The upward pointing arc may be of any form, e.g. a kind of an upside down "V" or "U", a sine, or of a similar form. The pole separator may have the same width (or a different width) as the isolating carrier. This may depend on mechanical restrictions.

The pole separator brings a lot of benefits. For instance, it prolongs a surface-distance between the poles. Thus, an electrical resistance between the poles is increased, even in dry weather. Moreover, in wet weather, humidity, e.g. in form of drops, may be led downward by the upward pointing arc. These effects may be more effective when the pole separator has or comprises a plurality of upward pointing arcs.

In various embodiments, the upward pointing arc is formed as a triangle, a rectangle, a segment of a circle, as a sine and/or as a sinoidal curve. An example for the segment of a circle may be a half circle. The selection of one of these forms may depend on an ease of manufacturing, stability considerations - e.g. to avoid a predetermined breaking point - and/or further aspects.

In various embodiments, the pole separator has or comprises a plurality of upward pointing arcs. The plurality of upward pointing arcs may advantageously contribute to a better electrical separation between the poles and/or to a higher electrical resistance between them.

In various embodiments, each two vertices of the upward pointing arcs have a distance between 1 cm and 10 cm, preferably between 2 cm and 5 cm. These distances turned out to be particularly advantageous, e.g. in regards to manufacturing and/or behaviour in wet weather.

In some embodiments, the isolating pole separator is formed in one piece with the isolating carrier. The may be particularly advantageous with regard to manufacturing and/or storage costs.

In various embodiments, the pole separating arrangement further comprises a third conducting pole that is arranged above the isolating carrier, and an isolating mounting element, arranged between the third conducting pole and the isolating carrier.

The isolating mounting element comprises a bracket, configured for mechanically connecting the third conducting pole with the isolating carrier, wherein the bracket comprises a downward pointing protrusion.

The third conducting pole may be a chassis or a part of the chassis, which may mechanically connect the "scissor-like" part of the pantograph with the isolating carrier, on which to poles are mounted. The isolating mounting element may thus connect third conducting pole with the isolating carrier. The third conducting pole may be connected to protected earth, PE, or another electric ground. The isolating mounting element may, besides the bracket, further comprise mounting means, such as screws, rivets, or the like. However, there may be further mounting means, for example for a positive-locking, force-locking, or a firmly bonded connection between the bracket, the third conducting pole, and the isolating carrier. The bracket comprises a downward pointing protrusion, and/or the downward pointing protrusion is mounted on the bracket.

This may advantageously prevent humidity - e.g. rain drops or droplets - from forming a continuous path between the third conducting pole and the isolating carrier, which carries the poles. This may be achieved by the downward pointing protrusion, because, by this, they have a defined point where they can glide off. The downward pointing protrusion may, e.g., be formed as a flared out section, e.g. on a bottom or a lower edge of the bracket. For further preventing that the droplets do not accumulate towards the sides, the flared out section may be lower in the middle and taper up towards the edges.

In some embodiments, the downward pointing protrusion is arranged horizontally along a lower edge of the bracket. The downward pointing protrusion may cover at least a part of the lower edge of the bracket. The downward pointing protrusion may be slightly inclined, e.g. to move the droplets to one corner. Said features may advantageously contribute to bring the droplets away from the pantograph and/or its parts.

In some embodiments, the pole separating arrangement further comprises a further downward pointing protrusion that is arranged horizontally along a mid portion of the bracket. Optionally, multiple of these "barriers" (the downward pointing protrusions) may be introduced on this bracket. Said "barriers" may not only contribute to bring the droplets away from the pantograph and/or its parts, but they may further contribute to prolong a surface-distance between the poles, thus increasing an electrical resistance between the parts, even in dry weather.

In various embodiments, the downward pointing protrusion and/or the further downward pointing protrusion has an outer angle of more than 90° and an inner angle of less than 90°. This may advantageously contribute to make the above-mentioned benefits particularly effective.

In various embodiments, the third conducting pole is configured for a connection to a ground contact, particularly to protected earth, PE. This may advantageously contribute to have good electrical conditions, particularly a high safety at the pantograph.

An aspect relates to a use of a pole separating arrangement as described above and/or below for protecting conducting poles from an electric creepage path between the poles of a multipole pantograph. The creepage between the poles may, for instance, be caused by rain or another kind of humidity, possibly in combination with conducting particles in the air, e.g. pollution. This may bring a risk for reduced resistance between the poles, which may be prevented, at least partly, by the pole separating arrangement described above and/or below.

Please note that the features described above may be combined, as far as not physically impossible.

For further clarification, the invention is described by means of embodiments shown in the figures. These embodiments are to be considered as examples only, but not as limiting.

### Brief Description of the Drawings

The drawings depict:
- **Fig. 1**: a picture of a part of a multipole pantograph;
- **Fig. 2a, 2b, 2c**: schematically cross-section variations of an isolating mounting element according to an embodiment;
- **Fig. 3**: schematically an isolating pole separator according to an embodiment.

### Detailed Description of Embodiments

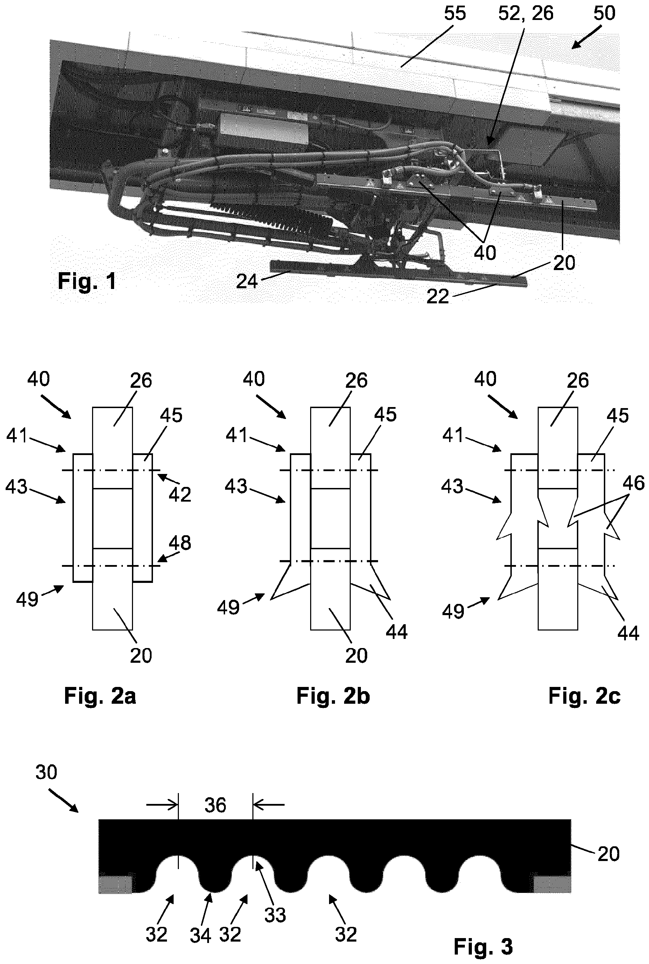

**Fig. 1** shows a picture of a part of a multipole pantograph 50, which comprises a pole separating arrangement 10. The pantograph 50 is shown in a retracted position. For charging, the pantograph may move down to connect with electrical contacts on the roof of a vehicle for initiating a charging process. The shown pantograph 50 is mounted on a roof 55 of white colour. A part of a chassis 52 of the pantograph 50 visible. The chassis 52 comprises a third conducting pole 26. On the third conducting pole 26, two isolating carriers 20 are mounted, by means of an isolating mounting element 40. Each one of the two isolating carriers 20 has a first conducting pole 22 and a second conducting pole 24, which are arranged on the isolating carrier 20 (reference signs 22, 24 only on one of the isolating carriers 20). The poles 22, 24 are configured for contacting a corresponding second pole on an electric vehicle (not shown). Between the poles 22, 24, an isolating pole separator 30 is arranged.

**Figs. 2a, 2b, 2c** show schematically cross-section variations of an isolating mounting element 40. **Fig. 2a** shows schematically an isolating mounting element 40, which combines a part of a third conducting pole 26 with a part of an isolating carrier 20 (see **Fig. 1**). The mounting element 40 comprises two brackets 45, which are mounted on the third conducting pole 26 and the isolating carrier 20, by means of an upper screw 42 and a lower screw 48, respectively. The brackets 45 have each an upper edge 41, a mid portion 43, and a lower edge 49. Identical reference signs like in **Fig. 2a** shown on **Figs. 2b** and **2c** show the same or similar parts.

**Fig. 2b** shows schematically an isolating mounting element 40 with a downward pointing protrusion 44 on the lower edge 49 of each of the brackets 45. The protrusions 44 may be formed in one piece with the bracket 45, or as an additional element.

**Fig. 2c** shows schematically an isolating mounting element 40 with a downward pointing protrusion 44 on the lower edge 49 of each of the brackets 45 and a further downward pointing protrusion 46 on the mid portion 43. The further downward pointing protrusions 46 may be arranged only on an outside of the brackets 45, or both on an inside and on the outside (as shown in **Fig. 2c**).

**Fig. 3** shows schematically an isolating pole separator 30 according to an embodiment. The isolating pole separator 30 is configured for being arranged on an isolating carrier 20, between a first conducting pole 22 and a second conducting pole 24 (see **Fig. 1**). The isolating pole separator 30 shown in **Fig. 3** has a plurality of upward pointing arcs 32. Between each two of the arcs 32, a downward pointing arc 34 is arranged. The plurality of upward pointing arcs may, on the one hand, contribute to a higher electrical resistance between the first conducting pole 22 and the second conducting pole 24 and to a better electrical separation between the poles 22, 24, even in dry weather. In addition, the isolating pole separator 30 may bring further benefits in wet weather, because droplets may be led down to the downward pointing arcs 34, thus keeping the upward pointing arcs 32 dry. A distance 36 between vertices 33 of the upward pointing arcs 32 may be between 1 cm and 10 cm, preferably between 2 cm and 5 cm.

### List of Reference Symbols

- 10: pole separating arrangement
- 20: isolating carrier
- 22: first conducting pole
- 24: second conducting pole
- 26: third conducting pole
- 30: isolating pole separator
- 32: upward pointing arc
- 33: vertex
- 34: downward pointing arc
- 36: distance
- 40: isolating mounting element
- 41: upper edge
- 42: upper screw
- 43: mid portion
- 44: downward pointing protrusion
- 45: bracket
- 46: further downward pointing protrusion
- 48: lower screw
- 49: lower edge
- 50: multipole pantograph
- 52: chassis
- 55: roof

## Claims

1. A pole separating arrangement (10) for a multipole pantograph (50) or a multipole fixed arrangement for charging an electric vehicle, the pole separating arrangement (10) comprising:
a first conducting pole (22), arranged on an isolating carrier (20) and configured for contacting a corresponding first pole on the electric vehicle;
a second conducting pole (24), arranged on the isolating carrier (20) and configured for contacting a corresponding second pole on the electric vehicle; and
an isolating pole separator (30), arranged between the first conducting pole (22) and the second conducting pole (24), wherein the pole separator (30) has at least one upward pointing arc (32).

2. The pole separating arrangement (10) of claim 1,
wherein the upward pointing arc (32) is formed as a triangle, a rectangle, a segment of a circle, as a sine and/or as a sinoidal curve.

3. The pole separating arrangement (10) of claim 1 or 2,
wherein the pole separator has or comprises a plurality of upward pointing arcs (32).

4. The pole separating arrangement (10) of claim 3,
wherein each two vertices (33) of the upward pointing arcs (32) have a distance (36) between 1 cm and 10 cm, preferably between 2 cm and 5 cm.

5. The pole separating arrangement (10) of any one of the claims 1 to 4,
wherein the isolating pole separator (30) is formed in one piece with the isolating carrier (20).

6. The pole separating arrangement (10) of any one of the preceding claims, further comprising:
a third conducting pole (26), arranged above the isolating carrier (20); and
an isolating mounting element (40), arranged between the third conducting pole (26) and the isolating carrier (20), the isolating mounting element (40) comprising a bracket (45), configured for mechanically connecting the third conducting pole (26) with the isolating carrier (20),
wherein the bracket (45) comprises a downward pointing protrusion (44).

7. The pole separating arrangement (10) of claim 6,
wherein the downward pointing protrusion (44) is arranged horizontally along a lower edge (49) of the bracket (45).

8. The pole separating arrangement (10) of claim 6 or 7, further comprising a further downward pointing protrusion (46) that is arranged horizontally along a mid portion (43) of the bracket (45).

9. The pole separating arrangement (10) of claim 6, 7 or 8,
wherein the downward pointing protrusion (44) and/or the further downward pointing protrusion (46) has an outer angle of more than 90° and an inner angle of less than 90°.

10. The pole separating arrangement (10) of any one of the claims 6 to 9,
wherein the third conducting pole (26) is configured for a connection to a ground contact, particularly to protected earth, PE.

11. Use of a pole separating arrangement (10) of any one of the preceding claims for protecting conducting poles (22, 24, 26) from an electric creepage path between the poles of a multipole pantograph (50).
